# EUROPEAN PATENT APPLICATION

(11) **EP 0 943 233 A1**
(43) Date of publication of application: **22.09.1999**
(21) Application number: 98830161.0
(22) Date of filing: 20.03.1998
(51) Int. Cl.: A01G 25/00, E02B 11/00

(54) **Method suited to improve the conditions of humidity and ventilation around the roots of the plants in a cultivation**

(71) Applicant: Maestroni, Vittorio, 21040 Origgio (IT)
(72) Inventor: Maestroni, Vittorio, 21040 Origgio (IT)
(74) Representative: Pizzoli, Pasquale Vincenzo

(57) **Abstract**

At least one block (2) is prepared which is obtained by compacting and binding a given number of various tyres (3), such that each block may feature cavities (c) communicating with one another and with the outside suited to receiving and retaining water and air; this block is buried in an area interested by the roots (11) of plants in a cultivation.

## Description

The present invention concerns a method suited to improve the conditions of humidity and ventilation around the roots of the plants in a cultivation.

The field of the invention is that of the techniques to keep the roots of plants in tree, fruit and vegetable, flower and similar cultivations, humid and ventilated. These techniques have been developed since man has understood that the humidity and ventilation of the roots of plants is one of the primary conditions for their good health. Often, terrain resist penetration by water and air in order to reach the roots and this can represent a danger and damages to the plants. Moreover, it may also be that the desirable humidity tensions for each type of plant, generally between 10 and 100 mm water column, often only between 10 and 30 mm, are such that the soil is provided with a certain impermeability to air which is necessary also to the bacteria present in the soil and that, as it is known, perform a number of beneficial activities for roots. Finally, one should consider the fact that also the temperature conditions of the roots are essential for their health.

The prior art comprises ploughing, harrowing, and hoeing, and various irrigation solutions.

The drawbacks of the prior art are of a financial nature and in terms of effectiveness; deep ploughing involves high costs because it involves layers of soil to a depth of at least 30 cm, while harrowing and hoeing only touch superficial layers of the soil, and irrigation is often dealt with through the action of costly plants and sometimes to rainfall alone that can be insufficient or absent.

The present invention obviates the above mentioned drawbacks and offers advantages that will be explained in the following description; this method, as characterized in the claims, comprises the burying in the cultivation soil of at least one block of non-rotting materials bearing inter-communicating cavities between the same and the outside suited to gathering and holding air and irrigation or meteoric water.

By non-rotting materials, we intend materials that can be buried without deteriorating.

The block is preferably obtained by compacting and binding a given number of tyres.

In a first alternative, the block is obtained by compacting and binding a given quantity of segments of plastic and metal profiles, residues of plastic materials processing in the form of shavings, plastic-bottle sections, pieces of bricks or concrete conglomerates, bitumen conglomerates and similar.

In a second alternative the block is obtained by hot laying layers of plastic strands one upon another within a water-proof non rotting container in order to form along with the container a block disseminated with a great number of oblong fissures or cavities into which air and water penetrates and is kept.

In addition, the block or a bed of blocks adjacent to one another are buried in a volume of soil limited laterally and blow by a water-proof sheeting in order to gather and preserve water within said volume of soil and within the same blocks.

Preference for the blocks produced by compacting and binding of a given number of mixed tyres (intended as those used on motor-vehicles) is mainly due to the fact that tyres are especially suited to this purpose; they all have the well known circular cavity in which the inner-tube or pressurized air are held; they can be easily deformed and are cheap thanks to the fact that used tyres would be used; these blocks can also be found on the market, produced in order to minimize their volume to be sent to waste disposal discharges. When they are deformed during compacting their cavities are contorted into random shapes of which, however, many are positioned so as to receive and maintain water when the block is buried and the soil above is naturally or artificially irrigated. A block of tyres contains between 40 and 60% empty cavities, according to the degree of compacting exerted.

The compacting of tyres is performed by an appropriate machine or, especially in the case of lightweight tyres, such as bicycle tyres, manually with the help of suitable tools.

The block is generally in the shape of a parallelepiped or a cube and of sizes suited to the cultivation involved; obviously the shape may be any other suitable one, such as a ball or spherical shape; the block will be buried before the sowing or the setting of the root-stock, at a depth such that its upper part or wall lies about 30 cms from the soil surface, in a natural site, in a green-house or in a tank or flower-pot; if the block is to be laid in a large surface cultivation, for instance in a vegetable garden, the blocks will be laid in the form of a bed with blocks adjacent to one another.

The main advantages of the invention lie in the capacity of the block in receiving within its volume advantageous quantities of air and irrigation or rain water and in that they detain them for a long time and in the fact that they absorb large quantities of solar heat to later slowly release it around the block.

Experiments conducted through the seasons have provided various information concerning the present invention, both concerning the phenomena within and around the block and the effects of the block on plants. A part of such information are provided herein in the form of examples.

A first result of the experiments is that a given block volume containing water absorbs more heat than an equal volume of soil at the same depth and more so when the external temperature falls below 20°C.

A buried block is the equivalent of a sort of underground lung full of damp air, vapour, nitrogen and other gases, all at a pressure that remains substantially uniform for a certain time, and, according to external conditions, becomes greater or lesser than the atmospheric pressure. This underground lung actually performs a form of respiration; when the block contains a greater heat than the surrounding soil, the gases within and around the block rise towards the surface of the soil, while when the block is cooler it recalls atmospheric air within and around itself.

A further result is that when air is present in the space comprised between the surface of the soil and the upper part of the block is consumed or abandons said space, the gases contained in the block rise to fill the empty spaces and supply oxygen, vapour, nitrogen, carbon dioxide, etc. to the soil.

An example of experiments concerning the effects of the block is related to vegetable garden cultivations, especially to lettuce and beetroot.

A first sample of cultivation was prepared by burying ten blocks in a suitable terrain one adjacent to the other, the blocks were 2 sq.m. each (sides 100 x 200 x 80 cm.) with the upper surface about 30 cms deep; adjacent to the first sample another was prepared with an equal surface, but with no blocks.

On both samples of ground beetroot seeds were sowed contemporarily in the same conditions and after fifteen days the average diameter of the roots was 5.6 mm. for the product gathered in the first sample and 2.0 mm. for the second sample.

After twenty days the sampling was repeated and again the same percentage difference in the diameter of the roots was measured.

With a similar sampling method as above the effect of the block on lettuce leaves was experimented. After 15 days from the rooting in of lettuce plantlets in the two sample grounds the weight of the lettuce leaf system in those planted on the blocks was 3.25 times that of those planted in ground in the conventional manner.

Apart from the difference in weight of the plants examined, one should also note that it was found that the plants grown on the blocks reached their full physiological development much earlier than the others.

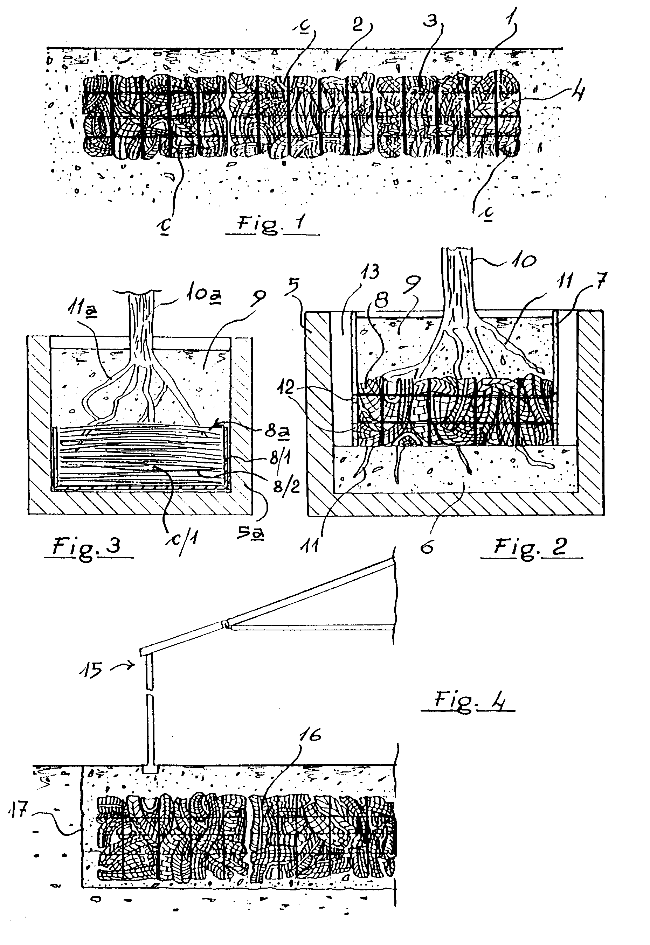

Examples of how to carry out the method are illustrated below with reference to the attached drawings in which
Figures 1, 2, 3 and 4 are vertical sections.
Fig. 1 shows an open ground 1 in which a bed of blocks 2 made of tyres 3 are buried (only three blocks are shown) in order to affect a given surface to be cultivated with a mixture of salad, tomatoes, and peppers according to the method invented. The c indicates some cavities of the blocks facing upwards. Each block has sides 100 x 100 x 80 cms (80 cms height) and is made by compacting and binding by steel wire 4 about one hundred used tyres from medium size automobiles. The bed of blocks is located about 30 cms below ground level.
Fig. 2 shows a cement flower-pot 5 in which a layer 6 of soil 30 cms high onto which four cement diaphragms 7 are placed (only the two lateral ones are shown) that define an internal volume on the bottom of which a block 8 is placed covered by a layer 9 of soil into which a small magnolia tree 10 is planted; the roots 11, planted into the layer 9, have penetrated into the fissures in block 8 and have extended into the layer 6 of soil. The diaphragms 7 bear apertures 12 that set the volume occupied by block 8 in communication with the gap 13 defined by diaphragms 7 and the walls of the flower-pot to enhance the previously described "respiration" phenomenon featured by the block.
Fig. 3 shows a more simple embodiment of the invention, used to grow a lemon tree 10a in a flower-pot 5a; a block 8a is placed in the flower-pot as defined by a plastic container 8/1 in which a mass of plastic strands 8/2 has been formed and disseminated by a number of oblong cavities c/1; the block 8a is covered by a layer 9 of soil in which are roots 11a; the ends of the roots penetrate cavities c/1.
Fig. 4 shows an application of the invention in a vast area of ground covered by a greenhouse 15; a bed of blocks 16 adjacent to one another has been laid in the entire area at a distance of 28 cms from the surface of the ground, while the entire ground comprising the blocks is enclosed laterally and below by a single sheet 17 of PVC. The purpose of this sheet is to gather irrigation or rain water both within the soil and within the blocks.

## Claims

1. A method to improve the conditions of humidity and ventilation around the roots of plants in a cultivation **characterized** in that it comprises the burying in the cultivation ground (1,9) of at least one block (2) of non rotting materials featuring inner cavities (c) that communicate among one another and with the outside and are suited to gathering and retaining air and water.

2. A method according to claims 1, 2 characterized in that each block (2,8,8a,16) is buried so that its upper part is 30 cms under the ground surface.

3. A method according to claims 1, 2 characterized in that the block (2) is obtained by compacting and binding a given number of tyres (3).

4. A method according to claims 1, 2 characterized in that the block (2) is obtained by compacting and binding a given quantity of segments of plastic and metal profiles, residues of plastic working processes in the form of shavings, sections of plastic bottles, elements of brick or cement conglomerates, bitumen conglomerates and others.

5. A method according to claims 1,2 characterized in that the block (8a) is obtained by hot laying layers of plastic strands (8/2) within a water-proof and non rotting container (8/1) one upon the other in order to form with the container a block disseminated with a large quantity of oblong cavities (c/1) in which water and air may penetrate and be detained.

6. A method according to claims 1, 2 characterized in that a block (2) or a bed of blocks (16) are buried in a volume of soil that is limited laterally and below by a water-proof sheeting (17) with the purpose of gathering and preserving water within said volume if soil and within the same blocks.
